# EUROPÄISCHE PATENTSCHRIFT

(11) **EP 0 572 850 B1**
(45) Veröffentlichungstag und Bekanntmachung des Hinweises auf die Patenterteilung: **03.01.1996**
(21) Anmeldenummer: 93107968.5
(22) Anmeldetag: 17.05.1993
(51) Int. Cl.: B24B 31/10, A23K 1/00, A23N 17/00

(54) **Vorrichtung zur Bearbeitung von Futterwürfeln**
Device for post-treatment of pellets
Dispositif de traitement pour granulés (pellets)

(30) Priorität: 05.06.1992 CH 1812/92
(43) Veröffentlichungstag der Anmeldung: 08.12.1993
(73) Patentinhaber: BÜHLER AG, CH-9240 Uzwil (CH)
(72) Erfinder: Theaudin, André, F-35290 St. Méen-Le-Grand (FR); Wetzel, Willi, CH-9240 Uzwil (CH)

(56) Entgegenhaltungen:
- EP-A- 0 225 765
- AU-A- 35 902
- DE-U- 8 628 516
- GB-A- 1 272 315
- US-A- 4 280 303

## Beschreibung

Die Erfindung betrifft eine Vorrichtung zur Bearbeitung von Futterwürfeln (Pellets) zu im wesentlichen abriebfreien Pellets. Die Verarbeitung von mehligem Futtergemisch in einer Würfelpresse zu Futterwürfeln kann je nach den Mischkomponenten und je nach Pressverfahren dazu führen, dass die nach der Würfelpresse transportierten und gelagerten Futterwürfel einen Abrieb aufweisen, der wieder als mehliger Anteil im Gesamten anfällt. Insbesondere sind die Kanten der Pellets potentielle Bruchstellen, die auch bei härtesten Pellets immer zu einem gewissen Grad zu Feinteilen führen.

Dieser mehlige Anteil ist für den Tierhalter, welcher diese Futterwürfel verfüttert, insoferne ein Verlust, als die Tiere diesen mehligen Anteil entweder nicht zu sich nehmen können, oder nicht zu sich nehmen wollen, so dass dieser Anteil, bestenfalls zu Kompostierungszwecken zusammen mit anderen Abfallteilen verwendet werden kann. Eine Rückführung zur Wiederverpressung kommt aus wirtschaftlichen und sanitären Gründen immer weniger in Frage. Eine Vorrichtung mit der der mehlige Anteil von den Pellets getrennt werden kann, ist z.B. aus der DE-U-86 28 516 bekannt.

Es war deshalb die Aufgabe der Erfindung, eine Vorrichtung zu finden, welche die von der Würfelpresse stammenden Futterwürfel derart bearbeitet, dass Abrieb in demjenigen Moment erfolgt, in welchem dieser wieder erfasst und gegebenenfalls erneut der Würfelpresse zugeführt werden kann. Die Aufgabe wurde erfindungsgemäss durch die im 1. Anspruch aufgeführten Merkmale gelöst.

Der Vorteil der Erfindung besteht darin, dass die Futterwürfel auf eine schonende Art und Weise nur so viel von ihrer Form verlieren, welche notwendig ist, um denjenigen Teil des Futterwürfels (insbesondere deren Kanten) zu entfernen, welcher das Transportieren in weiteren Fördermitteln und das Lagern sowie das Austragen aus den Lagersilos nicht überstehen und als Feinanteil in der Würfelmenge verbleiben würde.

Die Erfindung wird anhand von Ausführungsbeispielen im folgenden gezeigt und beschrieben.

Es zeigt:
- Fig. 1: ein Längsschnitt durch eine erfindungsgemässe Vorrichtung entsprechend den Schnittlinien I (Fig. 2), halbschematisch dargestellt;
- Fig. 2: ein Querschnitt durch die Fig. 1 entsprechend den Schnittlinien II (Fig. 1);
- Fig. 3: ein einzelnes Element (in Fig. 2 eingekreist) der erfindungsgemässen Vorrichtung, vergrössert und im Schnitt dargestellt;
- Fig. 4: ein Ausschnitt aus Fig. 1 vergrössert und detaillierter dargestellt;
- Fig. 5: ein Ausschnitt aus Fig. 2 vergrössert und detaillierter dargestellt und zeigt eine Variante der erfindungsgemässen Vorrichtung von Fig. 4;
- Fig. 6: zeigt einen Schnitt durch die Fig. 5 gemäss den Schnittlinien III-III (Fig. 5) und zugleich ein Ausschnitt aus der Vorrichtung von Fig. 1;
- Fig. 7: eine Ansicht des Ausschnittes von Fig. 6 in Blickrichtung IV (Fig. 6);
- Fig. 8a bis c: Varianten von den erfindungsgemässen Details der Fig. 7, ausschnittweise dargestellt;

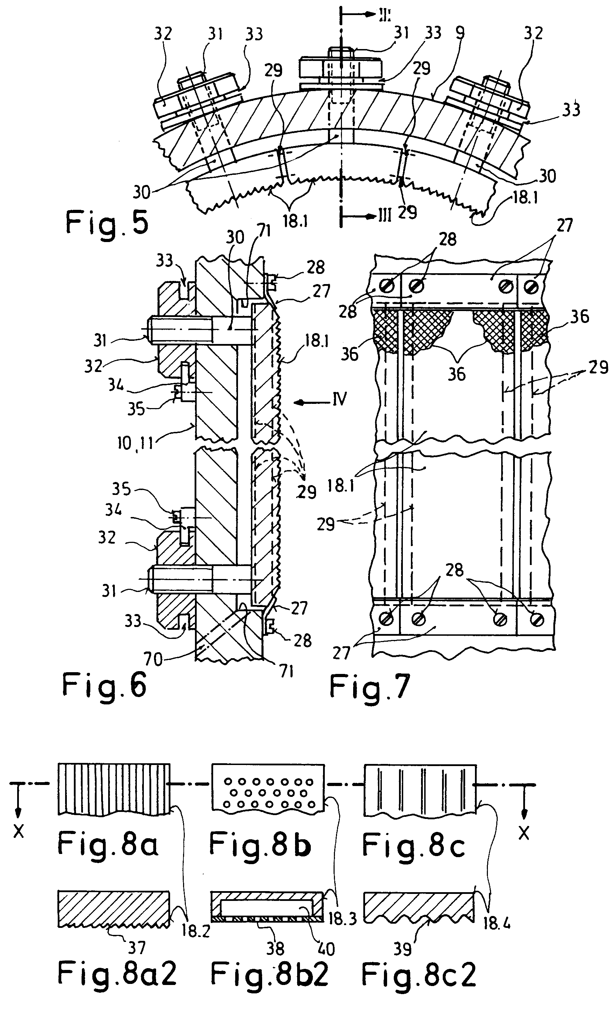

- Fig. 8a1 bis c1: Querschnitte der Details der Fig. 8a bis c;

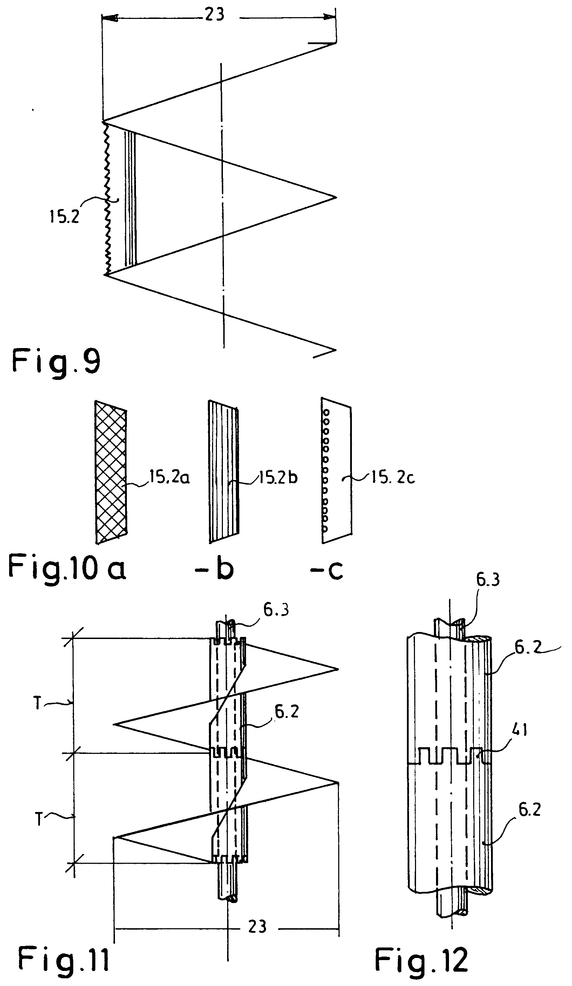

- Fig. 9: ein erfindungsgemässes Detail, vergrössert und halbschematisch dargestellt;
- Fig. 10a bis c: Varianten des Details von Fig. 9;

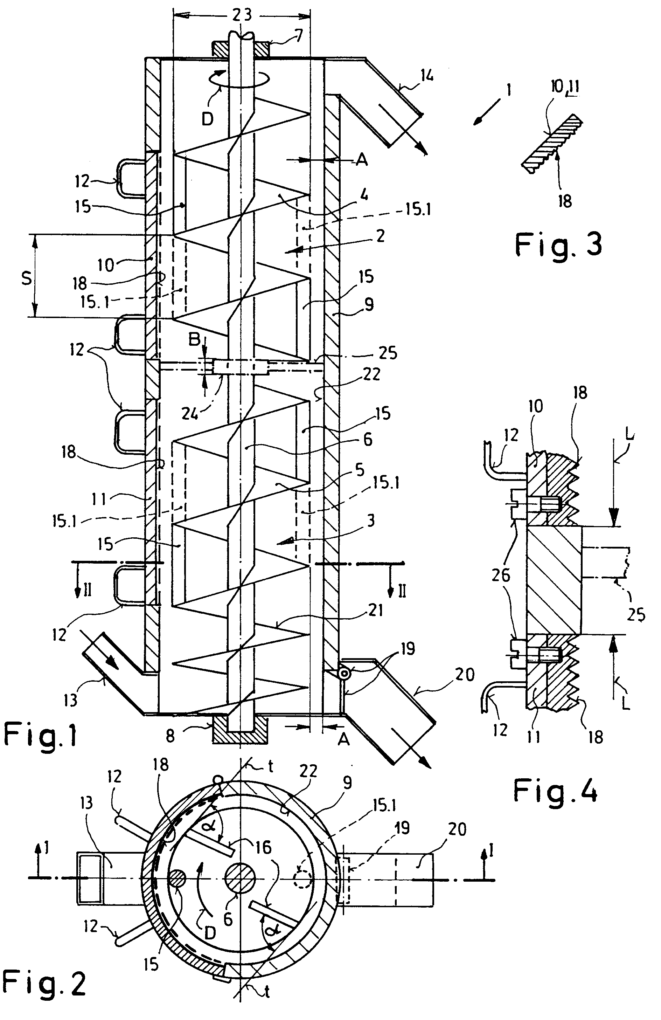

- Fig. 11: ein Detail der Vorrichtung von Fig. 1, vergrössert dargestellt;
- Fig. 12: ein Detail der Fig. 11, vergrössert dargestellt;

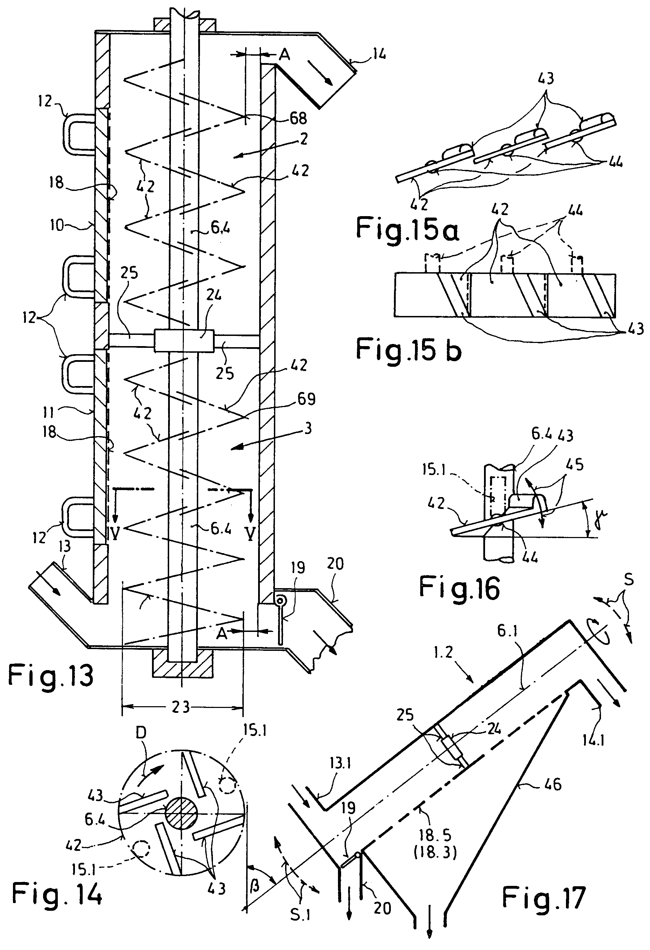

- Fig. 13: eine Variante der Fig. 1;
- Fig. 14 bis 16: je ein Detail der Vorrichtung von Fig. 13;
- Fig. 17 bis 19: je eine Variante der Anordnung und Verwendung der Vorrichtung von Fig. 1 und 13;

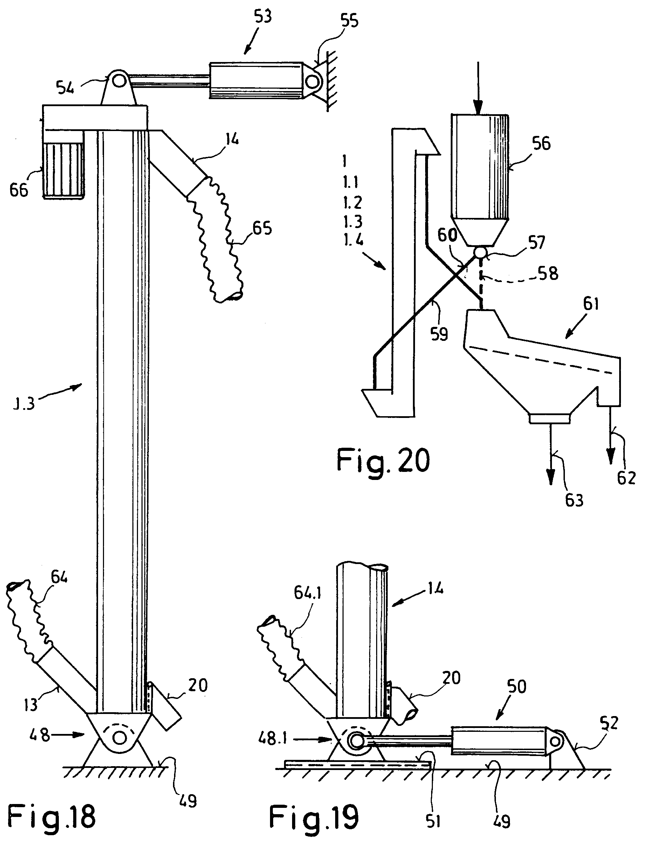

- Fig. 20: eine schematischen Darstellung einer Verwendung der erfindungsgemässen Vorrichtung gemäss den vorangehenden Figuren;

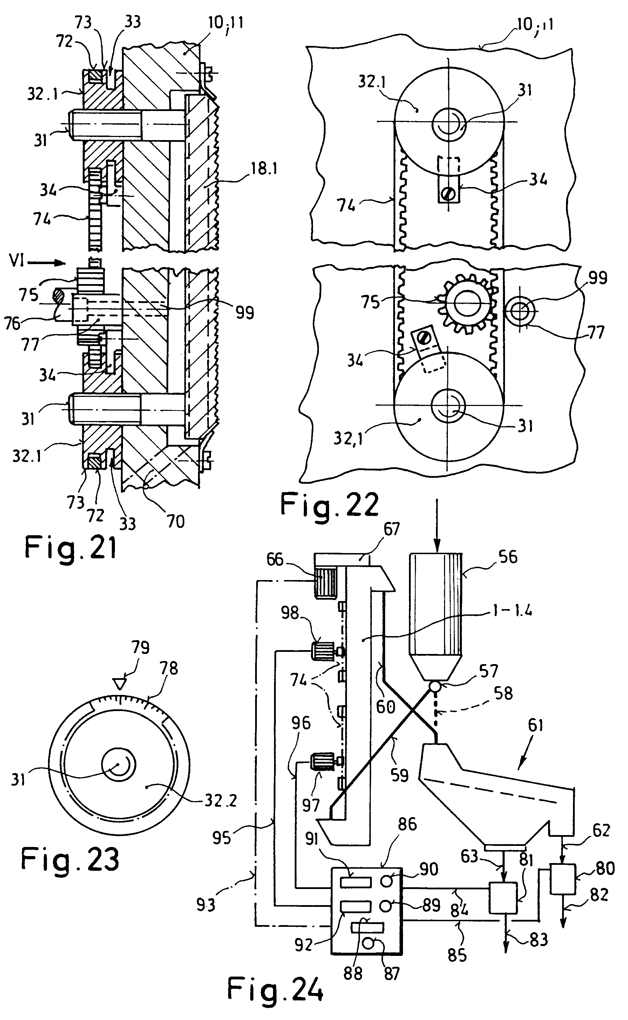

- Fig. 21: ein Schnitt analog Fig. 6 einer Variante der erfindungsgemässen Vorrichtung;
- Fig. 22: eine Ansicht der Vorrichtung von Fig. 21 in Blickrichtung VI;
- Fig. 23: ein Detail der erfindungsgemässen Vorrichtung;
- Fig. 24: ein Blockschema zur Darstellung einer Anwendungsvariante der erfindungsgemässen Vorrichtung gemäss den Fig. 21 und 22.

Die Fig. 1 zeigt eine erfindungsgemässe Vorrichtung 1 mit einer oberen Förderschnecke 2 und einer unteren Förderschnecke 3, welche an der gemeinsamen Schneckenwelle 6 befestigt sind. Die obere Förderschnecke weist einen oberen Schneckenwendel 4 und die untere Förderschnecke 3 weist einen unteren Schneckenwendel 5 auf. Die untere Förderschnecke 3 hat im weiteren dem unteren Schneckenwendel 5 ein Anfangswendel 21 vorgelagert, welcher direkt an den unteren Schneckenwendel 5 nahtlos anschliesst und ebenfalls fest mit der Schneckenwelle 6 verbunden ist.

Die Welle 6 ist einerseits in einem unteren Wellenlager 8 axial und radial gelagert, währenddem das obere Wellenlager 7 die Schneckenwelle 6 radial lagert.

Die Lager 7 und 8 sind je fest mit einem die Schneckenwendel 4, 5 und 21 umschliessenden Gehäuse 9 verbunden.

Das Gehäuse 9 weist eine obere Türe 10 und eine untere Türe 11 auf, welche durch Befestigungsmittel mit dem Gehäuse verbunden werden. Diese Befestigungsmittel können beispielsweise einerseits Scharniere und anderseits Riegel sein, so dass die Türen für das Öffnen schwenkbar gelagert sind. Diese letztgenannten Mittel sind nicht gezeigt. Die Möglichkeit die Türen zu öffnen ist halbschematisch mittels den an den Türen befestigten Handgriffen 12 symbolisch dargestellt.

Zwischen der Innenwand 22 des Gehäuses 9 und dem Aussendurchmesser 23 der Schneckenwendel 4, 5, und 21 ist ein radialer Spalt mit der Breite A vorgesehen, dessen Zweck später beschrieben wird.

An den Schneckenwendeln 4 und 5 sind wechselseitig Mitnehmer in Form von stabförmiger Verteilelemente 15 vorgesehen, welche mit den beiden stirnseitigen Enden mit dem Schneckenwendel verbunden und angrenzend an den Aussendurchmesser 23 vorgesehen sind, wie dies mit Fig. 1 bzw. 2 dargestellt ist. Die Funktion dieser Verteilelemente wird später erklärt. Im weiteren sind Mitnehmer in Form von Leitrippen 16 vorgesehen, welche wie mit Fig. 2 gezeigt, pro Steigung S (Fig. 1) derart angeordnet sind, dass sie mit einer Tangente t einen Winkel bilden, wobei die Tangente t an demjenigen Punkt des Aussendurchmessers 23 der Schneckenwendel 4 und 5 anliegt, an welchem die Leitrippe 16 mit dem einen Ende an diesen Aussendurchmesser 23 angrenzt und der Winkel α in Drehrichtung D der Schneckenwelle 6 gerichtet ist. Diese Leitrippen fördern das Produkt gegen die Innenwand 22, was später genauer beschrieben wird.

Im weiteren weisen die Türen 10 und 11 an ihrer Innenseite Friktionselemente 18 auf, welche den Spalt A ebenfalls einhalten.

Diese Friktionselemente 18 können, wie später beschrieben, wählbare Rauhigkeitsgrade aufweisen, welche mittels verschiedener Arten von Zähnen oder scharfkantigen Erhöhungen etc. erzeugt werden können, welche die nach Innen gerichtete Oberfläche der Friktionselemente bilden. Solche Erhöhungen oder Zähne sind im Friktionselement der Fig. 3 dargestellt. Die Oberfläche kann aber auch beispielsweise feilenähnlich sein, wie dies beispielsweise für Eisenfeilen verwendet wird. Der Zweck dieser Friktionselemente wird später beschrieben.

Die Fig. 4 zeigt ausschnittweise und vergrössert einen Teil der Fig. 1, insbesondere derjenige, welcher das Befestigen der Friktionselemente 18 an der oberen Türe 10 und an der unteren Türe 11 mittels der Schrauben 26 zeigt. In dieser Fig. soll noch mit den Distanzlinien L dargestellt werden, dass die Friktionselemente 18 sich im wesentlichen über die ganze Länge der Türen 10 und 11 erstrecken. Dass sich die Friktionselemente 18 ebenfalls im wesentlichen über die ganze Breite der Türen erstrecken, ist aus Fig. 2 ersichtlich. Um diesen Ausschnitt in Bezug auf die Lage dieses Ausschnittes innerhalb der Fig. 1, noch deutlicher zu kennzeichnen, ist der Lagersteg 25 (wie in Fig. 1) mit strichpunktierten Linien eingezeichnet.

Im weiteren weist das Gehäuse 9, wie in Fig. 1 gezeigt, am unteren Ende einen Gehäuseeinlauf 13 und am oberen Ende einen Gehäuseauslauf 14, sowie ebenfalls am unteren Ende einen Entleerungsauslauf 20 auf.

Innerhalb dieses letztgenannten Entleerungsauslaufes 20 ist eine verschliessbare Entleerungsklappe 19 vorgesehen, welche durch irgendwelche Mittel verschliessbar ist, beispielsweise manuell oder mittels eines Kraftelementes, beispielsweise einer pneumatischen Kolben-Zylinder-Einheit (nicht gezeigt).

Im Betrieb gelangen die durch den Gehäuseeinlauf 13 eingeführten Würfel in den Bereich des Anfangswendels 21 und werden von diesem erfasst und nach oben befördert, so dass sie auf den unteren Schneckenwendel 5 gelangen und von diesem einerseits weiter nach oben gefördert, sowie mittels der Leitrippen 16 in Richtung Gehäuseinnenwand 22 resp. in Richtung Friktionselemente 18 geführt und daran während dem Weiterfördern derart gerieben werden, dass die Würfelkanten abgenutzt werden und als Feinteile ausfallen.

Mit den Verteilementen 15 wird das Produkt gewissermassen spachtelähnlich verteilt, an den vorgenannten Friktionselementen 18 vorbeigeführt, so dass eine möglichst gleichmässige Schicht an diesen Friktionselementen 18 vorbeigeführt werden kann. Der früher erwähnte Spalt A dient dazu, dass die Würfel nicht nur nach oben gefördert, sondern in diesem Spalt wieder zurückfallen können, so dass die Würfel gewissermassen in einem "Pilgerschritt" "zwei Stufen vorwärts" gefördert werden, und anderseits "eine Stufe rückwärts" fallen, was einer guten durchschnittlichen Berührung der Pellets mit den Friktionselementen erlaubt und gleichzeitig zu einer inneren Umschichtung der Pellets führt, sodass im Laufe der Förderung alle Pellets der Reibbehandlung unterzogen werden.

Der Feinanteil wird zusammen mit den Würfeln durch den Gehäuseauslauf ausgeschieden und später in einer Siebmaschine von den Futterwürfeln getrennt und gegebenenfalls wieder der Würfelpresse zugeführt.

Der Spalt A kann vorgegeben oder, wie später beschrieben, je nach Würfelgrösse unterschiedlich gewählt werden, wobei der Spalt A durch Versuche von Fall zu Fall ermittelt werden muss.

Dadurch dass die Friktionselemente Bestandteile der entfernbaren oder öffenbaren Türen 10 und 11 sind, besteht einerseits die Möglichkeit, die Rauhigkeit dieser Friktionselemente zu überprüfen oder sie auszuwechseln.

Ebenfalls besteht die Möglichkeit die Rauhigkeit dieser Friktionselemente 18, wie später beschrieben, je nach Würfelmaterial unterschiedlich zu wählen, was ebenfalls durch Versuche von Fall zu Fall ermittelt werden muss.

Ueberraschenderweise hat es sich gezeigt, dass ein Unterbruch in der Förderung, wie dies mit dem Abstand B zwischen dem oberen Schneckenwendel 4 und dem unteren Schneckenwendel 5 dargestellt ist, für das technologische Resultat, d.h. Erhöhung der Abriebsfestigkeit der Würfel im weiteren Transport, vorteilhaft ist, abgesehen davon, dass in einem solchen Falle ein Zwischenlager 24 vorgesehen werden kann, welches mittels Lagerstege 25 an der Innenwand 22 des Gehäuses 9 abgestützt werden kann.

Die Schneckenwelle 6 dreht in der Pfeilrichtung D und ist durch einen Antriebsmotor, welcher am oberen Ende der Schneckenwelle 6 vorgesehen ist, angetrieben.

Um sich an die Art und Grösse der Würfel anzupassen, kann der vorgenannte Motor so gewählt werden, dass die Drehzahl der Schneckenwelle mittels dem in der Drehzahl variablen Motorantrieb verändert resp. angepasst werden kann.

Die Fig. 5 zeigt mit einem Ausschnitt aus der Fig. 2, welcher die Friktionselemente beinhaltet, insoferne eine Variante, als mit Fig. 5 dargestellt wird, dass im Gegensatz zur Darstellung zu Fig. 4, in welcher die Friktionselemente 18 stationär sind, die Friktionselemente 18.1 verschiebbar sind. Diese Verschiebbarkeit wird dadurch ermöglicht, dass die Friktionselemente 18.1 mittels daran befestigter Führungsbolzen 30, welche im Gehäuse 9 verschiebbar, jedoch geführt gelagert sind, im Rahmen dieser Verschiebbarkeit vom Gehäuse weg oder hinzu verstellbar sind.

Zur besseren Erläuterung sei auch die Fig. 6 hinzugezogen, welche den Schnitt gemäss den in Fig. 5 gezeigten Schnittlinien III darstellt.

Aus Fig. 6 ist ersichtlich, dass pro Friktionselement 18.1 zwei Führungs-bolzen 30 vorgesehen sind. Ausserdem sind diese Führungsbolzen 30 aus führungstechnischen Gründen vorteilhafterweise im Bereiche des oberen resp. unteren Endes des Friktionselementes 18.1 vorgesehen.

Aus den beiden vorgenannten Figuren ist ersichtlich, dass im weiteren die Führungsbolzen 30 einen Gewindeteil 31 aufweisen, welcher der Aufnahme einer Verstellmutter 32 dient, die ihrerseits einen ringförmigen Führungsschlitz 33 aufweist, in welchen ein Führungsnocken 34 ragt. Der Führungsnocken 34 wird mittels einer Befestigungsschraube für 35 am Gehäuse 9 befestigt, sodass beim synchronen Drehen der in Fig. 6 gezeigten oberen und unteren Verstellmutter 32 das Friktionselement 18.1 vom Gehäuse 9 weg oder hinzu verschoben werden kann. Um zu verhindern, dass Feinteile in den Zwischenraum zwischen dem Gehäuse 9 und dem Friktionselement 18.1 gelangen kann, sind wie in Fig. 6 und 7 gezeigt, Abdeckungen 27 vorgesehen, welche durch Befestigungsschrauben 28 am Gehäuse 9 fest angeordnet sind. Anstelle dieser Abdeckungen können auch Dichtungen im Spalt zwischen dem Friktionselement 18.1 und den Wänden 71 der die Friktionselemente 18.1 aufnehmenden Vertiefungen in den Türen 10 und 11, angebracht werden.

Eine weitere Massnahme zur Verhinderung, dass der genannte Feinanteil der Würfel in dem Zwischenraum zwischen dem Gehäuse 9 und dem Friktionselement 18.1 gelangen kann, besteht darin, dass Dichtungen 29 vorgesehen sind, sodass der zu Fig. 5 gezeigte Spalt zwischen benachbarten Friktionselementen 18.1, welcher aufgrund des Verschiebens der Friktions-elemente 18.1, durch die Dichtungszungen 27 immer abgedichtet ist.

Aus den Fig. 5, 6 und 7 ist ersichtlich, dass die nach innen gerichtete Oberfläche der Friktionselemente 18.1 eine Zahnoberfläche ist, wie sie beispielsweise mit Fig. 4 dargestellt ist.

Die Fig. 8a bis 8c.1 sollen darstellen, dass auch andere Friktionsoberflächen möglich sind, nämlich beispielsweise zeigt Fig. 8a eine Ansicht gemäss Fig. 7 mit einem Ausschnitt der Oberfläche, welche statt Zähne senkrechte Rillen aufweist, mit Blick auf die Fig. gesehen, was mit dem Querschnitt der Fig. 8a.1 weiter dargestellt ist. Diese Friktionselemente werden als Variante mit 18.2 gekennzeichnet Die Rillen sind mit 37 gekenn-zeichnet.

Mit den Fig. 8b und 8b.1 ist eine Friktionselementvariante 18.3 gezeigt, welche eine Friktionsoberfläche mit einer gelochten Oberfläche 38 aufweist. Diese gelochte Oberfläche ist Teil einer gelochten Platten, wie dies mit Fig. 8b.1 gezeigt ist, die einen Hohlraum 40 abdeckt, der die durch die Löcher der gelochten Oberfläche 38 durchtretende Feinanteil übernimmt und da der Hohlraum 40, mindestens unten, mit Blick auf Fig. 6 gesehen offen ist, kann dieser Hohlraum 40 durch Entfernen des Friktionselementes 18.3 entleert werden.

Vorteilhafterweise kann der Hohlraum 40 an einen nach aussen führenden Kanal 70 (mit strichpunktierten Linien dargestellt) angeschlossen werden, so dass der Feinanteil laufend gesammelt werden kann.

Die Fig. 8c und 8c.1 zeigen mit dem Friktionselement 18.4 eine weitere Variante eines Friktionselementes, indem hier die Oberfläche eine Wellenoberfläche 39 ist, welche senkrechte Wellen, mit Blick auf die Figuren gesehen, aufweist.

Wie aus den Fig. 5 bis 7 ersichtlich, sind die Friktionselemente auswechselbar, sodass einerseits die verschiedenen Varianten eingesetzt werden können, es können jedoch auch die verschiedenen, mit den Fig. 8a bis c1 gezeigten Varianten wählbar abwechslungsweise nebeneinander vorgesehen werden, so dass eine Variabilität in Bezug auf die Aggressivität der Friktionsoberflächen gewählt werden kann.

Mit der Fig. 9 soll dargestellt werden, dass ein Verteilelement 15.2 gegenüber dem Verteilelement 15 der Fig. 1 und 2 nicht eine glatte Oberfläche aufweist, sondern wie hier in Fig. 9 eine gezahnte. In Fig. 9 sind die Zähne allerdings nur auf einer Kante vorgesehen, während in Fig. 10a als Variante, die Zähne an einem Verteilelement 15.2a flächig angeordnet sind.

Die Fig. 10b und 10c zeigen weitere Varianten in Bezug auf die Rauhigkeit der Oberfläche der Verteilelemente, indem die Fig. 10b ein Verteilelement 15,2b mit Rillen zeigt, die parallel zur Achse des Verteilelementes gerichtet sind, während die Fig. 10c mit dem Verteilelement 15.2c eine gelochte Oberfläche zeigt.

Die Fig. 11 zeigt, dass eine Förderschnecke unterteilbar ist, und zwar indem die Schneckenwelle pro Steigung T eine Wellenhülse 6.2 aufweist, welche über eine Innenwellen 6.3 gestülpt und von dieser im wesentlichen spielfrei geführt wird.

Die Fig. 12 zeigt, dass die einzelnen Wellenhülsen 6.2, zwecks Kraftübertragung von Hülse zu Hülse, mit einer Zahnkupplung 41 versehen sind.

Die Fig. 13 zeigt insofern eine Variante gegenüber der Vorrichtung von Fig. 1 als es sich bei den Schneckenwendeln nicht um volle Wendel gemäss den Schneckenwendel 4 und 5, sondern um Palettenwendel 68 und 69 handelt. Die übrigen Elemente sind dieselben und entsprechend mit denselben Bezugszeichen gekennzeichnet, wobei auch hier alle Varianten der Friktionselemente verwendet werden können.

Die Fig. 14 zeigt einen Schnitt entsprechend dem Schnittlinien V in Fig. 13, aus dem ersichtlich ist, dass pro Umfang vier Palettenschaufeln 42 vorgesehen sind, welche, wie mit Fig. 16 gezeigt, mittels einer Befestigungs- und Schwenkachse 44 an einer entsprechend vorgesehenen Schneckenwelle 6.4 daran schwenk- und befestigbar sind. Die Palettenschaufeln sind in den Schwenkrichtungen 45 schwenkbar gehalten.

Die Schwenkbarkeit der Palettenschaufeln 42 ist mit dem Winkel γ dargestellt, wobei diese Schwenkbarkeit sich aufgrund der mit Fig. 15 gezeigten, der Einfachheit halber in einer gestreckten Umfangslinie dargestellten, Uebereinanderanordnung der Palettenschaufeln eingeschränkt ist. Grundsätzlich ist die Steigung dieser Palettenwendel 68 und 69 und damit der Winkel gamma durch Versuche festzulegen.

Die Palettenschaufeln 42 sind in analoger Weise wie die Schneckenwendel 4 und 5 mit Leitrippen versehen, welche in dieser Variante mit der Zahl 43 gekennzeichnet sind.

Aus Fig. 14 ist ersichtlich, dass diese Leitrippen 43 ebenfalls in einem Winkel α zur Tangente t angeordnet sind, um in gleicher Weise wie die Leitrippen 16 das Produkt gegen die Innenwand 22 resp. gegen die Oberfläche der Friktionselemente 18 zu fördern.

Ebenfalls besteht die Möglichkeit Verteilelemente 15,1 (Fig. 14 und 16) analog der Verteilelemente 15 den Palettenschaufeln 42 zu zuzuordnen, welche in gleicher Weise an den Aussendurchmesser A-φ vorgesehen sind und eine empirisch zur ermittelnde, vorgegebene Verteilung am Umfang der Schneckenwendel 68 resp. 69 aufweisen.

Solche Verteilelemente 15.1 sind entweder fest auf einer entsprechenden Palettenschaufel 42 angeordnet, so dass diese ebenfalls im beschränkten Schwenkbereich gemäss dem Winkel γ mitschwenkt, was aufgrund des Spaltes A ohne Berührung der Gehäuseinnenwand resp. der Friktionselemente 18 möglich ist, oder ein solches Verstellelement ist manuell schwenk- und feststellbar an einer entsprechenden Palettenschaufel 42 befestigt, so dass jeweils die Richtung des Verteilelementes parallel zur Wellenachse gewährleistet werden kann.

Die Fig. 17 zeigt eine Variante der mit den Fig. 1 und 13 dargestellten erfindungsgemässen Vorrichtung, insofern als die Vorrichtung in einem von der Vertikalen um den Winkel β abweichenden Lage vorgesehen ist und dementsprechend der Eingang 13.1, der Ausgang 14.1 und Entleerausgang 20.1 einen anderen Winkel zur Schneckenwelle 6.1 einnehmen als dies mit den Fig. 1 und 13 gezeigt ist.

Diese Vorrichtung kann entweder gemäss Fig. 1 mit Schneckenwendel mit vollem Gewinde, oder gemäss Fig. 13 mit Palettenwendel ausgebildet sein. Im weiteren besteht durch die schräge Lage gemäss Winkel β die Möglichkeit, die Friktionselemente auf der, mit Blick auf Fig. 17 gesehen, unteren Seite der Vorrichtung vorzusehen und dabei beispielsweise eine gelochte Oberfläche, wie sie in der Fig. 8b.1 mit der Nummer 38 gekennzeichnet ist, so dass der Feinanteil durch diese gelochte Oberfläche in eine Sammeltrimelle 46 und aus dieser heraus gelangen kann.

Die Friktionselemente sind in dieser Variante mit 18.5 gekennzeichnet, wobei anstelle der Sammeltrimelle 46 ein Friktionselement 18.3 gemäss Fig. 8b.1 verwendet werden kann, so dass der Feinanteil am unteren Ende des Friktionselementes austreten und gesammelt werden kann.

Ebenfalls besteht die Möglichkeit, eine Kombination von Friktionselementen gemäss der Fig. 4 oder gemäss den Fig. 8a und 8c zu verwenden, in Kombination mit einer gelochten Fläche analog der Fläche 38 der Fig. 8b.1, so dass an den einen Stellen des Umfanges die Würfel auf einer rauhen Oberfläche bearbeitet und anschliessend der Feinanteil durch die gelochte Oberfläche aus der Vorrichtung entweichen kann.

Wie in Fig. 17 weiter gezeigt, besteht ebenfalls die Möglichkeit, den Winkel β zu verändern, indem die Vorrichtung 1.2 entweder an einem Ende mittels einer später beschriebenen Vorrichtung in den Richtungen S geschwenkt wird, oder gegebenenfalls mit einer analogen Vorrichtung ebenfalls am unteren Ende (mit Blick auf Fig. 17 gesehen), in den Richtungen S. 1 schwenkbar gehalten ist, so dass beide Enden gegenläufig geschwenkt werden können, wodurch sich der Winkel β verändert.

Die Fig. 18 zeigt ein Beispiel mit der Vorrichtung 1.3, in welchem diese am unteren Ende ein Scharnier 48 aufweist, welches einerseits fest mit der Vorrichtung 1.3 und anderseits fest mit einer stationären Tragfläche 49 verbunden ist und am oberen Ende mit Blick auf Fig. 18 gesehen, die Vorrichtung 1.3 mit einer Zylinder-Kolbeneinheit 53 mittels eines Scharnierteiles 54 schwenkbar verbunden ist, so dass mittels dieser Zylinder-Kolbeneinheit 53, da diese andererseits schwenkbar mit einem stationären Scharnierteil verbunden ist, die Vorrichtung 1.3 um den Schwenkpunkt des Scharnieres 48 herum geschwenkt werden kann.

Dementsprechend ist der Eingang 13 und sind die Ausgänge 14 und 20 mit flexiblen Rohrteilen 64 resp. 65 verbunden.

Mittels einer solchen Schwenkbewegung besteht die Möglichkeit den mit Fig. 17 gezeigten Winkel β zu verändern, wobei dieser Winkel beta 0° beträgt, wenn die Vorrichtung 1.3 in der vertikalen Lage angeordnet ist.

Die Fig. 19 zeigt eine Variante in der Anordnung der mit Fig. 18 gezeigten Vorrichtung 1.3, indem hier eine mit 1.4 bezeichnete Vorrichtung auch am unteren Ende, mit Blick auf Fig. 19 gesehen, mittels einer Zylinder-Kolbeneinheit 50 verschiebbar angeordnet ist, so dass in Kombination mit der Zylinder-Kolbeneinheit 53 die Vorrichtung an beiden Enden in ihrer Lage verschoben resp. geschwenkt werden kann.

Um diese Schwenkung des unteren Endes zu ermöglichen, ist die Zylinder-Kolbeneinheit 50 im weiteren mit einer stationären Stütze 52 und anderseits mit einem Scharnier 48.1, welches dem Scharnier 48 der Fig. 18 entspricht, schwenkbar verbunden, nur mit dem Unterschied, dass das Scharnier 48.1 auf Führungsschienen 51 geführt ist, so dass im Rahmen dieser Führungsschienen 51 das Scharnier 48.1 aufgrund der Bewegung der Zylinder-Kolbeneinheit 50 in horizontaler Richtung, mit Blick auf Fig. 19 gesehen, bewegbar ist.

Die Fig. 20 zeigt eine Anwendung der Vorrichtungen 1 bis 1.4, in dem diese Vorrichtung, diagrammatisch zwischen einem Pelletkühler 56 (an sich bekannt) der einer Würfelpresse (nicht gezeigt) folgt und einer Siebvorrichtung 61 (ebenfalls an sich bekannt) dazwischengeschaltet ist, wobei dank dem dass diese Vorrichtung 1 bis 1.4 nicht nur zur Bearbeitung von Futterwürfeln resp. Pellets, sondern auch zur Förderung dieser Pellets dient, keine zusätzliche Hubmittel für die Pellets zwischen dem vorgenannten Pelletkühler 56 und der Siebvorrichtung 61 notwendig sind. Dazu sind lediglich die entsprechenden Rohre 59 und 60 sowie eine Umstellklappe 57 notwendig, welche die gekühlten Pellets entweder in die Vorrichtung 1 bis 1.4 oder durch das Rohr 58 in die Siebvorrichtung 61 leiten.

Die Siebvorrichtung hat einerseits einen Siebabstoss, welcher die Siebvorrichtung 61 am Ausgang 62 verlässt, während der Feinanteil als Siebdurchfall die Siebvorrichtung am Ausgang 63 verlässt.

Weiter sei erwähnt, dass der Antriebsmotor 66 für die Entleerung der Schnecke in der Drehrichtung umkehrbar sein kann und anderseits besteht zusätzlich die Möglichkeit einen Motor zu verwenden, welcher in der Drehzahl variabel gehalten werden kann, so dass die Drehzahl der Schnecken den Erfordernissen angepasst werden kann, um das technologische Resultat, d.h. einen optimaler Abrieb der Pellets zu erhalten.

Die Fig. 21 und 22 zeigen insofern eine Variante der mit den Fig. 5 bis 7 gezeigten Ausführungsvariante der erfindungsgemässen Vorrichtung, indem die Verschiebung der Friktionselemente 18.1 motorisch durchgeführt wird. Dazu werden die beiden Verstellmuttern 32.1 im Gegensatz zu den Verstellmuttern 32 der Fig. 6 je mit einem Zahnkranz 72 versehen, welcher links und rechts, mit Blick auf Fig. 21 gesehen, mit Seitenführung 73 versehen ist, um einen Zahnriemen 74 zu führen, d.h. zu verhindern, dass dieser vom Zahnkranz 72 gleiten kann, wenn die Verstellmuttern 32.1 mittels des Zahnriemens 74 gedreht werden.

Der Zahnriemen 74 wird mittels eines Antriebsritzels 75 angetrieben, welches ebenfalls einen Zahnkranz analog dem Zahnkranz 72 aufweist, um in den Zahnriemen 74 zu greifen.

Das Antriebsritzel 75 ist auf einer Welle 76 eines Stellmotors 97 resp. 98 (Fig. 24), beispielsweise eines Schrittmotors, welcher ebenfalls an der Türe 10 resp. 11 befestigt ist (nicht dargestellt), fest angeordnet.

Das Antriebsritzel 75 ist breiter als der Zahnriemen 74 vorgesehen, um den Zahnriemen auf der ganzen Länge des Hubweges der Verstellmuttern 32.1 zu erfassen, welcher sich durch das Drehen der Verstellmutter 32.1 ergibt.

Um zu verhindern, dass der Zahnriemen 74 aus dem Zahnkranz des Antriebsritzels 75 ausgehoben werden kann, ist eine Gegenrolle 77 vorgesehen, welche auf einer in der Türe 10 resp. 11 eingelassenen Achse 99 dreht.

Die übrigen Elemente, welche denjenigen der Fig. 6, resp. 5 entsprechen, sind mit den gleichen Bezugszeichen versehen.

Die Fig. 23 zeigt eine Variante der Verstellmutter 32 der Fig. 5 und 6, indem diese Verstellmutter mit einer Skala 78 versehen ist und entsprechend mit 32.2 gekennzeichnet ist. Angrenzend an den Umfang der Skala 78 ist ein Richtpfeil 79 vorgesehen, welcher je in die Türe 10 resp. 11 eingelassen ist und eine genügende Länge aufweist, um auf der ganzen Länge des Hubes, welcher durch das Drehen der Verstell-mutter 32.2 entsteht, Gegenstück der Skala 78 zu sein. Die Verstellmutter 32.2 ist ebenfalls auf dem Gewindeteil 31 vorgesehen.

Mit der Fig. 24 ist ein schematisches Blockschema gezeigt, welches darstellen soll, dass die Stellmotoren 97 und 98 aufgrund einer Steuerung 86 ge-steuert werden.

Ebenfalls von der Steuerung 86 soll der bereits im Zusammenhang mit der Fig. 18 beschriebene Antriebsmotor 66 gesteuert werden.

Das Prinzip ist wie folgt:
Die Menge (Kilo/Stunde) der am Ausgang 62 der Siebvorrichtung 61 austretenden Würfel wird in einem Durchflussmengenmessgerät 80, von an sich bekannter Bauart, gemessen und als Signal 85 in die Steuerung 86 eingegeben. Der Würfelausgang des Durchflussmengenmessgerätes 80 ist mit 82 gekennzeichnet. Andererseits wird der Feinanteil, d.h. der Durchfall der Siebvorrichtung 61, welcher am Ausgang 63 austritt, ebenfalls mengenmässig (Kilo/Stunde) mittels eines Durchflussmengenmessgerätes 81 erfasst, und diese gemessenen Menge wird mit dem Signal 84 in die Steuerung 86 eingegeben. Der Produktausgang des Mengenmessgerätes 81 ist mit 83 gekennzeichnet.

Der Wert des Signales 84 wird mit einem, mittels eines Sollwerteingebers 90 eingegebenen und an einer Sollwertanzeige 91 angezeigten Sollwert verglichen, ebenso wird der mit dem Signal 85 eingegebene Wert mit einem mittels eines Sollwerteingebers 89 und an einer Sollwertanzeige 92 ange-zeigten Sollwert verglichen, wobei bei Abweichungen des Signales 84 gegenüber dem Sollwert der Anzeige 91, der Stellmotor 97 und bei Abweichungen des Signals 85 gegenüber dem an der Anzeige 92 angezeigten Sollwert der Stellmotor 98 entsprechend gesteuert wird.

Es besteht jedoch auch eine Möglichkeit (nicht dargestellt), dass in der Steuerung eine Differenz zwischen den Werten der Signale 84 und 85 gebildet wird und mit einem eingegebenen Sollwert verglichen wird, wobei beide Stellmotoren 97 und 98 in gleicher Weise verstellt werden.

Der Vorteil der ersten Variante besteht darin, dass die erste Hälfte der Vorrichtung, welche den Stellmotor 97 betrifft, primär massgebend für den Hauptfeinanteil ist, da es sich hier um die erste Abriebstrecke handelt während die obere Hälfte der Vorrichtung, welche dem Stellmotor 98 entspricht, gewissermassen nur noch der "letzte Rest" des Abriebes erfolgt.

Damit kann mit der erstgenannten Variante der Abrieb der Würfel differenziert erfolgen.

Im weiteren wird die Drehzahl des Motores 66 mittels eines Sollwerteingebers 87 eingegeben und an der Anzeige 88 angezeigt. Die variable Drehzahl des Motors 66 bringt den Vorteil, dass damit ebenfalls die Intensität des Abriebes der Würfel in der Vorrichtung 1 bis 1.4 gesteuert werden kann.

## Patentansprüche

1. Vorrichtung zur Bearbeitung von gepressten Futterwürfeln im weiteren Pellets genannt, zu im wesentlichen für den Weitertransport und für die weitere Lagerung abriebfreien Pellets, mit einer
in einem Gehäuse (9) in einer Richtung (D) dreh- und antreibbaren Förderschnecke (2, 3), deren Aussendurchmesser (23) eine vorgegebene Spaltbreite (A) zum Innendurchmesser (I-φ ) der Gehäuseinnenwand (22) aufweist, wobei die Gehäuseinnenwand 22 teilweise durch Friktionselemente (18 bis 18.5) gebildet ist, die eine gegenüber der übrigen Gehäuseinnenwandfläche erhöhte Rauhigkeit aufweisen.

2. Vorrichtung nach Anspruch 1, dadurch gekennzeichnet, dass die Förderschnecke (2, 3) Mitnehmer (15; 16; 43) aufweist, mittels welchen die Pellets zusätzlich zu der von der Schnecke gegebenen Förderrichtung, in axialer Richtung noch eine Förderrichtungskomponente in radialer Richtung erzeugen.

3. Vorrichtung nach Anspruch 1, dadurch gekennzeichnet, dass das Gehäuse (9) und die Förderschnecke (2, 3) vertikal oder in einem zur vertikalen vorgegebenenen Winkel β angeordnet sind.

4. Vorrichtung nach Anspruch 1, dadurch gekennzeichnet, dass die Förderschnecke (2, 3) Vollgewindewendel (4, 5) aufweist, welche die Pellets im wesentlichen in axialer Richtung fördern.

5. Vorrichtung nach Anspruch 1, dadurch gekennzeichnet, dass die Förderschnecke (2, 3) Paletten-Wendel (68, 69) mit einer Mehrzahl nacheinander folgender Paletten (42) aufweist, welche mit einem vorgegebenen Steigungswinkel γ angeordnet sind, und welche die Pellets im wesentlichen in axialer Richtung fördern.

6. Vorrichtung nach Anspruch 2, dadurch gekennzeichnet, dass die Mitnehmer Leitrippen (16; 43) sind, welche derart an der Förderschnecke (2, 3) angeordnet sind, dass die Pellets dadurch zusätzlich in Richtung Innenwand (22) des Gehäuses (9) und damit auch in Richtung gegen die Friktionselemente (18) gefördert werden.

7. Vorrichtung nach Anspruch 1, dadurch gekennzeichnet, dass die Mitnehmer stabförmige Verteilelemente (15) sind, welche an der Förderschnecke (2, 3) und daran in einer Richtung angeordnet sind, welche im wesentlichen parallel zur Achsrichtung der Förderschnecke liegt.

8. Vorrichtung nach Anspruch 4 bis 7, dadurch gekennzeichnet, dass die Leitrippen (16 bzw. 43) derart auf den Schneckenwendeln (4, 5) bzw. auf den Paletten (42) vorgesehen sind, dass sie mit einer Tangente (t) einen Winkel α bilden, wobei die Tangente (t) an denjenigen Punkt des Aussendurchmessers (23) der Schneckenwendel (4, 5) bzw. Palettenwendel (68, 69) anliegt, an welchem die Leitrippe (16; 43) mit dem einen Ende an diesem Aussendurchmesser (23) angrenzt, und dass sich der Winkel α in Drehrichtung (D) gerichtet, öffnet.

9. Vorrichtung nach Anspruch 4 bis 7, dadurch gekennzeichnet, dass die Verteilelemente (15) an den Aussendurchmessern (A) angrenzend angeordnet sind.

10. Vorrichtung nach Anspruch 4, dadurch gekennzeichnet, dass der Steigungswinkel γ, der Paletten (42) veränderbar und einstellbar ist.

11. Vorrichtung nach Anspruch 1, dadurch gekennzeichnet, dass die Friktionselemente (18) in radialer Richtung zur Förderschnecke (2, 3) vor und zurück verstellbar und einstellbar sind.

12. Vorrichtung nach Anspruch 1, dadurch gekennzeichnet, dass die Friktionselemente (18) auswechselbar sind.

13. Vorrichtung nach Anspruch 1, dadurch gekennzeichnet, dass die Friktionselemente (18) unterschiedliche Rauhigkeiten aufweisen.

14. Vorrichtung nach Anspruch 1, dadurch gekennzeichnet, dass die Friktionselemente (18) mindestens teilweise Sieblöcher aufweisen.

15. Vorrichtung nach Anspruch 3, dadurch gekennzeichnet, dass der Winkel β zur Vertikalen, welcher die Lage der Vorrichtung bestimmt, veränderbar ist.

16. Vorrichtung nach Anspruch 1, dadurch gekennzeichnet, dass die Friktionselemente (18) in entfernbare und oder öffenbare Türen (10, 11) der Vorrichtung vorgesehen sind.

17. Vorrichtung nach Anspruch 7, dadurch gekennzeichnet, dass die Verteilelemente (15) wählbar rauhe Oberflächen aufweisen.

18. Vorrichtung nach Anspruch 1, dadurch gekennzeichnet, dass die Förderschnecken (2, 3) in einzelne Elemente (6, 2) unterteilbar sind, welche von einer Innenwelle (6.3) aufgenommen und mittels einer Kupplung (41) miteinander kraftübertragend verbunden sind.

19. Vorrichtung gemäss den vorangehenden Ansprüchen, dadurch gekennzeichnet, dass sie wahlweise diagrammatisch zwischen einem Pelletkühler (56) und einer Siebvorrichtung (61) mittels einer Klappe (57) vorgesehen wird.

20. Vorrichtung gemäss Anspruch 19, dadurch gekennzeichnet, dass sie zum Bearbeiten der Pellets ohne zusätzliche Zwischenüberhebung diagrammatisch zwischen dem Pelletkühler (56) und der Siebvorrichtung (61) vorgesehen wird.

21. Vorrichtung nach Anspruch 1, dadurch gekennzeichnet, dass die Friktionselemente (18 bis 18.5) radial zur Förderschnecke (2, 3) verstellbar angeordnet sind.

22. Vorrichtung nach Anspruch 21, dadurch gekennzeichnet, dass die radiale Verstellbarkeit der Friktionselemente messbar vorgesehen ist.

23. Vorrichtung nach Anspruch 21, dadurch gekennzeichnet, dass die Friktionselemente motorisch verstellbar vorgesehen sind.

24. Vorrichtung nach den Ansprüchen 19 und 23, dadurch gekennzeichnet, dass Mittel (80, 81) vorgesehen sind, um die Durchflussmenge der von der Siebvorrichtung (61) anfallenden Produkte zu messen und Mittel (86), um diese Mengen in Form von Signalen (84, 85) aufzunehmen und mit entsprechenden Sollwerten von Sollwertgebern (89, 90) zu vergleichen und zu verarbeiten, um daraus Signale (95, 96) abzugeben, mittels welchen Stellmotoren (97, 98) betätigt werden, mittels welchen die Friktionselemente (18.1) verstellt werden.

25. Vorrichtung nach Anspruch 24, dadurch gekennzeichnet, dass die Steuerung ebenfalls Mittel (87, 88) umfasst, mittels welchen die Drehzahl eines in der Drehzahlvariablen Antriebsmotors (66) der Förderschnecken (2, 3) steuern.

## Claims

1. Apparatus for the processing of press moulded animal feed cubes, hereinafter called pellets, to produce pellets which are substantially abrasion-free for further transport and for further storage, with a conveying worm (2, 3) which is driveable and rotatable in one direction (D) in a housing (9) and whose external diameter (23) has a predetermined width of gap (A) from the internal diameter (I-φ) of the internal wall (22) of the housing, wherein the internal wall (22) of the housing is formed partly of friction elements (18 to 18.5) which have elevated roughness relatively to the remainder of the internal wall surface of the housing.

2. Apparatus according to claim 1, characterised in that the conveying worm (2, 3) has entrainment elements (15; 16; 43) by means of which the pellets are given a conveyance direction component in the radial direction additionally to the conveyance direction component in the axial direction imparted by the worm.

3. Apparatus according to claim 1, characterised in that the housing (9) and the conveying worm (2, 3) are arranged vertically or at a predetermined angle β relatively to the vertical.

4. Apparatus according to claim 1, characterised in that the conveying worm (2, 3) has full-screwthread helixes (4, 5) which convey the pellets substantially in the axial direction.

5. Apparatus according to claim 1, characterised in that the conveying worm (2, 3) has pallet helixes (68,69) with a plurality of pallets (42) arranged in succession to one another, which are arranged with a predetermined pitch angle γ and which convey the pellets substantially in the axial direction.

6. Apparatus according to claim 2, characterised in that the entrainment elements are guide ribs (16; 43) which are so arranged on the conveying worm (2, 3) that the pellets are thereby conveyed additionally in the direction towards the internal wall (22) of the housing (9) and thus also in the direction towards the friction elements (18).

7. Apparatus according to claim 1, characterised in that the entrainment elements are bar-form distribution elements (15), which are arranged on the conveying worm (2, 3) in a direction which is directed substantially parallel to the axial direction of the conveying worm.

8. Apparatus according to claims 4 to 7, characterised in that the guide ribs (16, 43 respectively) are so arranged on the worm helixes (4, 5) and on the pallets (42) respectively that they form an angle α with a tangent (t), and the tangent (t) contacts that point of the external diameter (23) of the worm helix (4, 5) or pallet helix (68, 69) at which the guide rib (16; 43) at one end adjoins this external diameter (23), and that the angle α opens in the direction of rotation (D).

9. Apparatus according to claims 4 to 7, characterised in that the distribution elements (15) are arranged to adjoin the external diameters (A).

10. Apparatus according to claim 4, characterised in that the pitch angle γ of the pallets (42) is variable and settable.

11. Apparatus according to claim 1, characterised in that the friction elements (18) are adjustable forwards and rearwards, and settable, in the radial direction with respect to the conveying worm (2, 3).

12. Apparatus according to claim 1, characterised in that the friction elements (18) are interchangeable.

13. Apparatus according to claim 1, characterised in that the friction elements (18) have differing roughnesses.

14. Apparatus according to claim 1, characterised in that the friction elements (18) at least partly comprise screening perforations.

15. Apparatus according to claim 3, characterised in that the angle β relatively to the vertical and which defines the position of the apparatus is variable.

16. Apparatus according to claim 1, characterised in that the friction elements (18) are arranged in removable and/or openable doors (10, 11) of the apparatus.

17. Apparatus according to claim 7, characterised in that the distribution elements (15) have selectively rough surfaces.

18. Apparatus according to claim 1, characterised in that the conveying worms (2, 3) can be sub-divided into individual elements (6, 2) which are accommodated by an internal shaft (6.3) and are connected to one another by a coupling (41) such as to allow transmission of force.

19. Apparatus according to the preceding claims, characterised in that it is provided selectively between a pellet cooler (56) and a screen apparatus (61) in the flow chart, selection being effected by means of a flap or valve (57).

20. Apparatus according to claim 19, characterised in that it is arranged, in the flow chart, between the pellet cooler (56) and the screen apparatus (61) for the processing of pellets without requiring additional intermediate transfer devices.

21. Apparatus according to claim 1, characterised in that the friction elements (18 to 18.5) are arranged to be adjustable radially with respect to the conveying worm (2,3).

22. Apparatus according to claim 21, characterised in that the radial adjustability of the friction elements is arranged to be measurable.

23. Apparatus according to claim 21, characterised in that the friction elements are arranged to be adjustable by motor means.

24. Apparatus according to claims 19 and 23, characterised in that means (80,81) are provided for measuring the through-flow quantity of the products produced by the screen apparatus (61), and means (86) for receiving these quantities in the form of signals (84, 85) and comparing with appropriate desired values from desired-value setters (89, 90) and processing to deliver therefrom signals (95, 96) by means of which adjusting motors (97,98) are operated by means of which the friction elements (18.1) are adjusted.

25. Apparatus according to claim 24, characterised in that the control also includes means (87, 88) for controlling the rotational speed of a, in the rotational speed variable drive motor (66) of the conveying worms (2, 3).

## Revendications

1. Dispositif de traitement de morceaux en cubes, comprimés, d'alimentation animale, pour obtenir des granulés (pellets), lesdits pellets devant être pratiquement exempts d'usure par abrasion, à l'occasion de la continuation du transport et du stockage ultérieurement, avec une vis de transport (2, 3) susceptible d'être entraînée en rotation et dans un sens de déplacement (D), dans un carter (9), vis dont le diamètre extérieur (23) crée une largeur d'interstice (A) prédéterminée par rapport au diamètre intérieur (I-φ) de la paroi intérieure de carter (22), la paroi intérieure de carter (22) étant constituée partiellement au moyen d'éléments de friction (18 à 18.5) présentant une rugosité augmentée par rapport à celle du reste de la surface de la paroi intérieure de carter.

2. Dispositif selon la revendication 1, caractérisé en ce que, la vis de transport (2, 3) présente des organes d'entraînement (15; 16; 43) au moyen desquels les granulés, en plus d'être déplacés dans la direction de transport produite par la vis, la direction axiale, produisent encore une composante directionnelle de transport orientée en direction radiale.

3. Dispositif selon la revendication 1, caractérisé en ce que le carter (9) et la vis de transport (2, 3) sont disposés verticalement, ou bien en faisant un angle prédéterminé β par rapport à la verticale.

4. Dispositif selon la revendication 1, caractérisé en ce que, la vis de transport (2, 3) présente des enroulements à filet plein (4, 5) qui transportent les granulés sensiblement en direction axiale.

5. Dispositif selon la revendication 1, caractérisé en ce que, la vis de transport (2, 3) présente des enroulements à palettes (68, 69) avec une pluralité de palettes (42) se faisant suite les unes les autres, disposées selon un angle de pas γ' prédéterminé et transportant les granulés sensiblement en direction axiale.

6. Dispositif selon la revendication 2, caractérisé en ce que les organes d'entraînement sont des nervures de guidage (16; 43), disposées sur la vis de transport (2, 3) de manière que les granulés soient de ce fait en plus transportés dans la direction de la paroi intérieure (22) du carter (9), et ainsi également dans la direction les faisant aller contre les éléments de friction (18).

7. Dispositif selon la revendication 1, caractérisé en ce que les organes d'entraînement sont des éléments distributeurs (15) en forme de barres, disposés sur la vis de transport (2, 3) et, sur celle-ci, en une direction située sensiblement parallèlement par rapport à la direction axiale de la vis de transport.

8. Dispositif selon les revendications 4 à 7, caractérisé en ce que, les organes d'entraînement sont les nervures de guidage (16) respectivement (43) sont prévues sur les enroulements de vis (4, 5) respectivement sur la palette (42) de manière à constituer avec une tangente (t) un angle α, la tangente (t) touchant, au point du diamètre extérieur (23) de l'enroulement de vis (4, 5) respectivement de l'enroulement à palettes (68, 69), auxquel la nervure de guidage (16; 43) est limitrophe par une extrémité sur ce diamètre extérieur (23), et en ce que l'angle α s'ouvre dans la direction du sens de rotation (D).

9. Dispositif selon les revendications 4 à 7, caractérisé en ce que, les éléments distributeurs (15) sont disposés limitrophes au diamètre extérieur (A).

10. Dispositif selon la revendication 4, caractérisé en ce que l'angle de pas γ' des palettes (42) est modifiable et réglable.

11. Dispositif selon la revendication 1, caractérisé en ce que les éléments de friction (18) sont déplaçables et réglables en avant et en arrière en direction radiale, par rapport à la vis de transport (2, 3).

12. Dispositif selon la revendication 1, caractérisé en ce que les éléments de friction (18) sont remplaçables.

13. Dispositif selon la revendication 1, caractérisé en ce que les éléments de friction (18) présentent des rugosités différentes.

14. Dispositif selon la revendication 1, caractérisé en ce que les éléments de friction (18) présentent au moins partiellement des trous de tamisage.

15. Dispositif selon la revendication 3, caractérisé en ce que l'angle β par rapport à la verticale, qui détermine la position du dispositif, est modifiable.

16. Dispositif selon la revendication 1, caractérisé en ce que les éléments de friction (18) sont prévus dans des portes (10, 11) démontables et/ou ouvrables du dispositif (17).

17. Dispositif selon la revendication 7, caractérisé en ce que les éléments distributeurs (15) présentent des surfaces rugueuses à volonté.

18. Dispositif selon la revendication 1, caractérisé en ce que les vis de transport (2, 3) sont subdivisables en éléments (6, 2) individuels qui sont supportés par un arbre intérieur (6.3) et sont reliés ensemble avec transmission mécanique au moyen d'un accouplement (41).

19. Dispositif selon les revendications précédentes, caractérisé en ce qu'il est prévu pour être mis en circuit à un endroit quelconque, entre un refroidisseur de granulés (56) et un dispositif de tamisage (61), au moyen d'un volet (57).

20. Dispositif selon la revendication 19, caractérisé en ce qu'il est prévu pour le travail des granulés sans surélévation intermédiaire, en un point du circuit situé entre le refroidisseur de granulés (56) et le dispositif de tamisage (61).

21. Dispositif selon la revendication 1, caractérisé en ce que les éléments de friction (18 à 18.5) sont disposés réglables radialement par rapport à la vis de transport (2, 3).

22. Dispositif selon la revendication 21, caractérisé en ce que la possibilité de réglage radiale des éléments de friction est prévue d'une façon permettant une mesure.

23. Dispositif selon la revendication 21, caractérisé en ce que les éléments de friction sont prévus réglages par moteur.

24. Dispositif selon les revendications 19 et 23, caractérisé en ce que sont prévus des moyens (80, 81), pour mesurer le débit des produits travaillés par le dispositif de tamisage (61), et des moyens (86), pour enregistrer ces quantités sous forme de signaux (84, 85) et les comparer a des valeurs de consigne correspondantes venant de transducteurs de valeur de consigne (89, 90) et pour les traiter, afin d'envoyer à partir de ceux-ci des signaux (95, 96) au moyen desquels sont actionnés des servomoteurs (97, 98), au moyen desquels les éléments de friction (18.1) sont réglés.

25. Dispositif selon la revendication 24, caractérisé en ce que la commande comprend également des moyens (87, 88) au moyen desquels est commandée la vitesse de rotation d'un moteur (66), à vitesse variable, d'entraînement des vis de transport (2, 3).
